(19) Europäisches Patentamt

European Patent Office

Office européen des brevets

(11) **EP 1 655 875 A2**

(12) **EUROPEAN PATENT APPLICATION**

(43) Date of publication:
**10.05.2006 Bulletin 2006/19**

(51) Int Cl.:
***H04L 1/06*** (2006.01)

(21) Application number: **05024123.1**

(22) Date of filing: **04.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.11.2004 KR 2004089507**

(71) Applicant: **Samsung Electronics Co., Ltd.
Suwon-si, Gyeonggi-Do (KR)**

(72) Inventors:
  • **Jeong, Hong-Sil
    Seoul (KR)**
  • **Chae, Chan-Byoung
    Seoul (KR)**
  • **Yun, Sung-Ryul
    Yeongtong-gu
    Suwon-si
    Gyeonggi-do (KR)**
  • **Roh, Won-Il
    Yongin-si
    Gyeonggi-do (KR)**
  • **Oh, Jeong-Tae
    Yongin-si
    Gyeonggi-do (KR)**
  • **Ko, Kyun-Byoung
    Taean-eub
    Hwasung-si
    Gyeonggi-do (KR)**
  • **Jung, Young-Ho
    Seoul (KR)**
  • **Nam, Seung-Hoon
    Yangcheon-gu
    Seoul (KR)**
  • **Chung, Jae-Hak
    Jongro-ku, Seoul 110-062 (KR)**

(74) Representative: **Grünecker, Kinkeldey,
Stockmair & Schwanhäusser
Anwaltssozietät
Maximilianstrasse 58
80538 München (DE)**

(54) **Apparatus and method for space-time-frequency block coding**

(57)    A transmitter for maximizing coding gain by transmitting an input symbol sequence through a plurality of transmit antennas method according to feedback CQIs from a receiver in a 3 Tx-rate 2 communication system. In the transmitter, an S/P converter converts serial modulated data to parallel modulated data. A coder mode decider determines a transmission mode based on the channel quality indicator of each transmit antenna fed back from a receiver. A coder transmits the parallel modulated data through the three transmit antennas according to the determined transmission mode.

FIG.3

**Description**

**PRIORITY**

This application claims priority under 35 U.S.C. § 119 to an application entitled "Apparatus And Method For Space-Time-Frequency Block Coding" filed in the Korean Intellectual Property Office on November 4, 2004 and assigned Serial No. 2004-89507, the contents of which are herein incorporated by reference.

**BACKGROUND OF THE INVENTION**

1. Field of the Invention

The present invention relates generally to a transmitter in a communication system supporting a data rate of 2 for three transmit antennas (a 3 Tx-rate 2 communication system), and in particular, to a transmitter for maximizing a coding gain by transmitting an input symbol sequence through a plurality of transmit antennas according to feedback Channel Quality Indicators (CQIs) from a receiver in a 3 Tx-rate 2 communication system.

Specifically, the present invention relates to a transmitter for space-time-frequency block coding (space-time block coding or space-frequency block coding) a transmission signal based on feedback channel information from a receiver and transmitting the space-time-frequency block coded signal (the space-time block coded signal or space-frequency block coded signal) through three antennas in order to realize a high-quality, highly reliable communication system.

A data rate is defined as the number of transmitted data units per unit of time in space-time block coding (STBC), as the number of transmitted data units per unit of resource (frequency and time) in space-time-frequency block coding (STFBC), and as the number of transmitted data units per frequency and time in space-frequency block coding (SFBC). In the case where eight data units are transmitted for four unit time intervals in STBC, eight data units are transmitted at two unit frequencies for two unit time intervals in STFBC, or eight data units are transmitted at four unit frequencies for one unit time interval in SFBC, the common data rate is 2.

2. Description of the Related Art

The fundamental issue in communications is how efficiently and reliably data is transmitted on channels. As high-speed communication systems capable of transmitting a variety of information including video and wireless data beyond the early-stage voice service is required for future-generation multimedia mobile communications, it is very significant to increase system efficiency by use of a channel coding method suitable for a system.

Generally, in the wireless channel environment of a mobile communication system, unlike that of a wired channel environment, a transmission signal inevitably experiences loss due to several factors such as multipath interference, shadowing, wave attenuation, time-variant noise, and fading.

The information loss can cause a severe distortion to the transmission signal, degrading the entire system performance. In order to reduce the information loss, many error control techniques are usually adopted to increase system reliability. One of the basic techniques is to use an error correction code.

Multipath fading is corrected for by diversity techniques in the wireless communication system. The diversity techniques are classified into time diversity, frequency diversity, and antenna diversity.

The antenna diversity uses multiple antennas. This diversity scheme is further classified into receive (Rx) antenna diversity using a plurality of Rx antennas, Tx antenna diversity using a plurality of Tx antennas, and multiple-input multiple-output (MIMO) using a plurality of Tx antennas and a plurality of Rx antennas.

The MIMO is a special case of space-time coding (STC) that extends coding of the time domain to the space domain by transmitting a signal encoded in a predetermined coding method through a plurality of Tx antennas, with the aim to achieve a lower error rate.

V Tarokh, et al. proposed STBC as one of methods of efficiently applying antenna diversity, as disclosed in Space-Time Block Coding from Orthogonal Designs, IEEE Trans. On Info., Theory, Vol. 45, pp. 1456-1467, July 1999. The Tarokh STBC scheme is an extension of the transmit antenna diversity scheme of S.M. Alamouti for two or more Tx antennas as disclosed in A Simple Transmit Diversity Technique for Wireless Communications, IEEE Journal on Selected Area in Communications, Vol. 16, pp.1451-1458, October 1988.

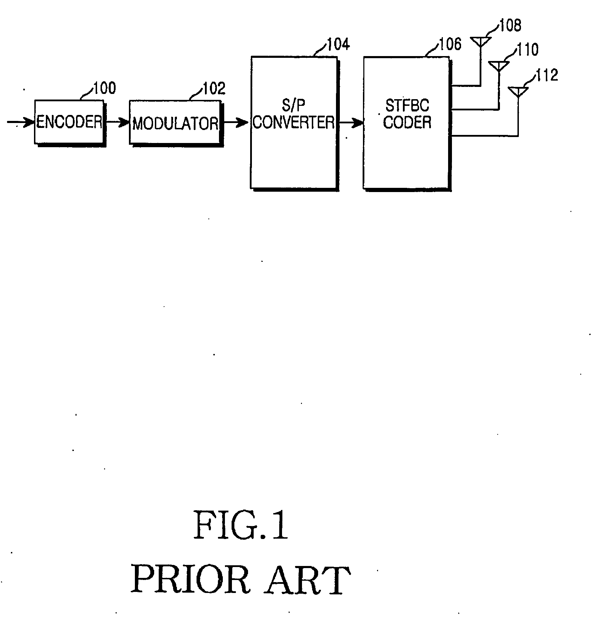

Another approach to the efficient application of the antenna diversity is to use STFBC. FIG 1 is a block diagram of a transmitter in a mobile communication system using a conventional STFBC scheme. The transmitter is comprised of an encoder 100, a modulator 102, a serial-to-parallel (S/P) converter 104, an STFBC coder 106, and three Tx antennas 108, 110 and 112.

Referring to FIG 1, the encoder 100 encodes information data to be transmitted. Many channel encoders are available as the encoder 100 which is used to realize a highly reliable communication system. The modulator 102 modulates the coded data according to a modulation scheme. The modulation scheme can be one of binary phase shift keying (BPSK), quadrature phase shift keying (QPSK), quadrature amplitude modulation (QAM), pulse amplitude modulation (PAM), and phase shift keying (PSK).

The S/P converter 104 converts the serial modulation symbols received from the modulator 102 into parallel modulation symbols, $s_1, s_2, s_3, s_4, s_5, s_6, s_7, s_8$. The STFBC coder 106 STFBC-encodes the eight modulation symbols and transmits them through the three Tx antennas 108, 110 and 112. A coding matrix used to generate a combination of the eight symbols at a data rate of 2 is expressed as

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$\dots \dots (1)$$

where A denotes the coding matrix for symbols to be transmitted through the three Tx antennas and $s_1, s_2, s_3, s_4, s_5, s_6, s_7, s_8$ denote the input eight symbols.

The rows of the coding matrix represent the Tx antennas and the columns represent time and frequencies at which the eight symbols are to be transmitted. The first two columns are transmitted at frequency f1, while the last two columns are transmitted at frequency f2. The first column of each of the first and last two columns is transmitted at time t1 and the second column is transmitted at time t2. Thus, the eight symbols are transmitted through the three Tx antennas at the two frequencies at the two time intervals.

Transmission of the columns is not limited to the time-frequency plane. The elements of the columns can be transmitted for different time intervals. That is, as the eight data units are transmitted for four time intervals through the three Tx antennas by mapping the four columns to time t1, t2, t3 and t4, respectively, the data rate of 2 is also achieved. Instead of the time plane, the columns can be transmitted in the frequency plane. Specifically, the four columns are transmitted at four frequencies f1, f2, f3 and f4, respectively, thus at the data rate of 2.

As described above, the STFBC coder 104 transmits the input eight symbols at two frequencies at two time intervals through the three Tx antennas 108, 110 and 112, or for four time intervals through the three Tx antennas 108, 110 and 112, or at four frequencies through the three Tx antennas 108, 110 and 112.

The Alamouti STFBC scheme offers the benefit of a maximum diversity order equal to the number of Tx antennas without a loss in the data rate even though complex symbols are transmitted through two Tx antennas. This implies that the symbols $s_1, s_2, s_3, s_4$ transmitted by the Alamouti scheme have the diversity effect and thus they can be effectively recovered. However, since the non-Alamouti symbols $s_5, s_6, s_7, s_8$ are excluded from the diversity effect, they are not effectively recovered and have a higher error probability than $s_1, s_2, s_3, s_4$.

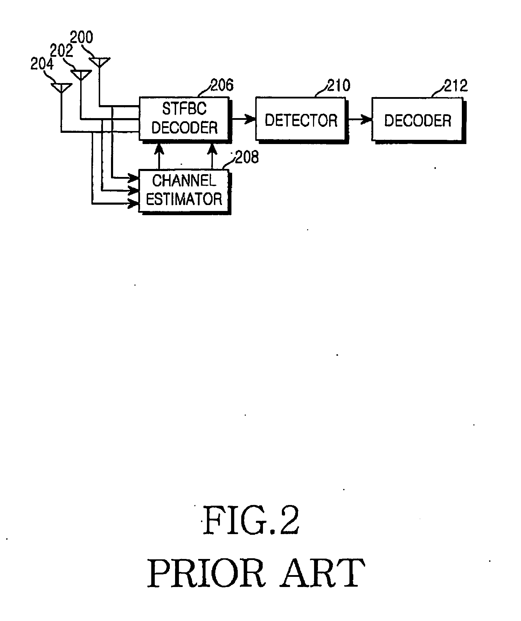

FIG. 2 is a block diagram of a receiver in the mobile communication system using the conventional STFBC scheme. The receiver is the counterpart of the transmitter illustrated in FIG. 1.

The receiver is comprised of a plurality of Rx antennas 200, 202 and 204, an STFBC decoder 206, a channel estimator 208, a detector 210, and a decoder 212.

Referring to FIG. 2, the first to $P^{th}$ Rx antennas 200 to 204 provide signals received from the three Tx antennas 108, 110 and 112 of the transmitter illustrated in FIG. 1 to the channel estimator 208 and the STFBC decoder 206.

The channel estimator 208 estimates channel coefficients representing channel gains from the Tx antennas 108 to 112 to the Rx antennas 200 to 204 using the signals received from the first to $P^{th}$ Rx antennas 200 to 204.

The STFBC decoder 206 estimates the input data based on the signals received from the Tx antennas 108, 110 and 112 by STFBC decoding corresponding to the STFBC coding that maps four of eight symbols to two Tx antennas by the Alamouti scheme and maps the remaining four symbols to the other Tx antenna.

The detector 210 generates hypothesis symbols of the transmitted symbols based on the STFBC-decoded symbols and the channel coefficients. The hypothesis symbols are obtained by calculating a decision statistic over all possible symbols transmittable from the transmitter.

The decoder 212 decodes the hypothesis symbols in a decoding method corresponding to the coding scheme used in the encoder 100 of the transmitter, thereby recovering the original information data bits.

### SUMMARY OF THE INVENTION

The distinctive drawback of the above-described conventional coding scheme is that diversity is achieved for the Alamouti-coded symbols $s_1$, $s_2$, $s_3$, $s_4$ but not for the non-Alamouti-coded symbols $s_5$, $s_6$, $s_7$, $s_8$ and thus $s_5$, $s_6$, $s_7$, $s_8$ are hard to recover and have a higher error probability, as compared to $s_1$, $s_2$, $s_3$, $s_4$.

An object of the present invention is to substantially solve at least the above problems and/or disadvantages and to provide at least the advantages below. Accordingly, an object of the present invention is to provide a transmission apparatus and method with improved performance in a 3 Tx-rate 2 mobile communication system.

The above object is achieved by providing a transmitter for maximizing coding gain by transmitting an input symbol sequence through a plurality of transmit antennas according to feedback CQIs from a receiver in a 3 Tx-rate 2 communication system.

According to one aspect of the present invention, in a transmitter in a communication system supporting a data rate of 2 for three transmit antennas, an S/P converter converts serial modulated data to parallel modulated data. An STBC coder mode decider (an SFBC coder mode decider or an STFBC coder mode decider) determines a transmission mode based on the channel quality indicator of each transmit antenna fed back from a receiver. An STBC coder (an SFBC coder or an STFBC coder) transmits the parallel modulated data through the three transmit antennas according to the determined transmission mode.

According to another aspect of the present invention, in a transmission method in a communication system supporting a data rate of 2 for three transmit antennas, serial modulated data is converted to parallel modulated data. A transmission mode index indicating a transmission mode determined by the receiver is received from the receiver. The parallel modulated data is space-time block coded (space-frequency block coded or space-time-frequency block coded) according to the determined transmission mode, and transmitted through the three transmit antennas.

## BRIEF DESCRIPTION OF THE DRAWINGS

The above and other objects, features and advantages of the present invention will become more apparent from the following detailed description when taken in conjunction with the accompanying drawings in which:

FIG 1 is a block diagram of a transmitter in a mobile communication system using a conventional STFBC scheme;
FIG 2 is a block diagram of a receiver in the mobile communication system using the conventional STFBC scheme;
FIG. 3 is a block diagram of a transmitter in a mobile communication system using an STFBC scheme according to the present invention; and
FIG 4 is a flowchart illustrating a transmission operation of the transmitter in the mobile communication system using the STFBC scheme according to the present invention.

## DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

The present invention is intended to provide an STFBC coding apparatus in a transmitter of a Tx-rate 2 communication system, more specifically a method and apparatus for generating an STFBC in the manner that maximizes the coding gain of the STFBC in a transmission scheme where an input symbol sequence is transmitted through a plurality of Tx antennas.

While the present invention is described in the context of an STFBC coding apparatus, it is also applicable to an STBC coding apparatus or an SFBC coding apparatus.

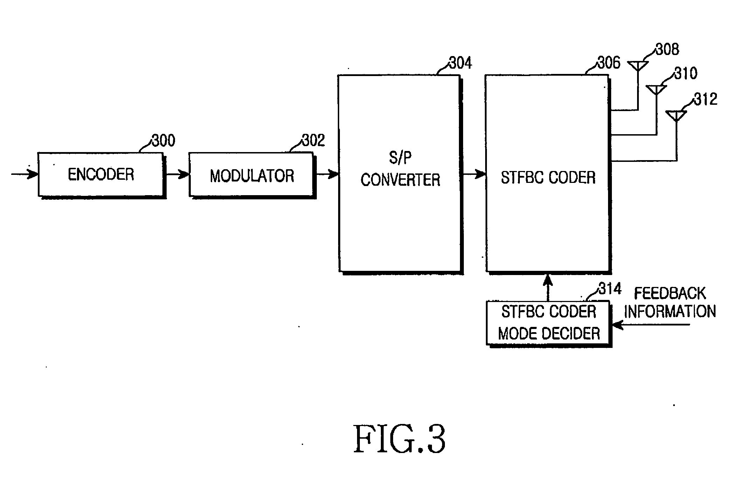

FIG. 3 is a block diagram of a transmitter in a mobile communication system using an STFBC scheme according to the present invention. The transmitter, similar to that illustrated in FIG. 1 in configuration, characteristically receives CQIs or an index indicating a Tx antenna selected to carry non-Alamouti data according to the CQIs from a receiver and transmits the non-Alamouti data on a channel with a good CQI based on the feedback information. Therefore, this transmission scheme enables efficient recovery of the transmitted signal and thus implementation of a highly reliable communication system.

Referring to FIG. 3, the transmitter includes an encoder 300, a modulator 302, an S/P converter 304, an STFBC coder 306, three Tx antennas 308,310 and 312, and an STFBC coder mode decider 314.

The components except the STFBC coder mode decider 314 operate in the same manner as their counterparts illustrated in FIG 1. According to the present invention, the transmitter is further provided with the STFBC coder mode decider 314 in addition to the components of the conventional transmitter in order to realize a communication system with improved performance.

A coding matrix for transmission mode 3 in the STFBC coder 306 is given as

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$\ldots \ldots (2)$$

where the rows of the coding matrix represent the Tx antennas and the columns represents time and frequencies at which the eight symbols are transmitted. The data of the first two columns are transmitted at frequency f1, while that of the last two columns at frequency f2. The data of the first column in each pair is transmitted at time t1 and that of the second column is transmitted at time t2. Specifically, the data of the first column is carried at frequency f1 and time t1, the data of the second column at frequency f1 and time t2, the data of the third column at frequency f2 and time t1, and the data of the fourth column at frequency f2 and time t2. Thus, the eight symbols are transmitted through the three Tx antennas at two frequencies for two time intervals.

Alternatively, the data of the first two columns can be transmitted at time t1, while that of the last two columns at time t2. The data of the first column in each pair is transmitted at frequency f1 and that of the second column is transmitted at frequency f2. Therefore, the data of the first column is carried at frequency f1 and time t1, the data of the second column at frequency f2 and time t1, the data of the third column at frequency f1 and time t2, and the data of the fourth column at frequency f2 and time t2.

As stated earlier, data transmission according to the coding matrix is not limited to the above time-frequency plane.

Thus transmission of the four columns at different time can be contemplated. That is, the data of the first to fourth columns are carried at time t1 to t4, respectively. In this case, the STFBC coder 306 is replaced by an STBC coder.

Also the columns can be transmitted at different frequencies. That is, the data of the first to fourth columns are carried at frequencies f1 to f4, respectively. In this case, the STFBC coder 306 is replaced by an SFBC coder.

Since the rows of the coding matrix represent the Tx antennas, the data of the first row is transmitted through the first Tx antenna 308, the data of the second row through the second Tx antenna 310, and the data of the third row through the third Tx antenna 312.

Consequently, the symbols $s_5$, $s_6$, $s_7$, $s_8$ are transmitted through the third Tx antenna 312. In the case where the channel gain of the third Tx antenna 312 is low, the symbols $s_5$, $s_6$, $s_7$, $s_8$ are hard to recover at the receiver. The transmission performance can be improved by transmitting the symbols $s_5$, $s_6$, $s_7$, $s_8$ through a Tx antenna having the highest channel gain.

Assuming that the first Tx antenna 308 has the highest channel gain, the data is preferably transmitted by the following coding matrix so that data recovery is facilitated at the receiver and the gain is improved. This transmission mode is set as transmission mode 1.

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$\ldots \ldots (3)$$

where the rows of the coding matrix represent the Tx antennas and the columns represents time and frequencies used to transmit the eight symbols.

The data of the first two columns are transmitted at frequency f1, while that of the last two columns at frequency f2. The data of the first column in each pair is transmitted at time t1 and that of the second column is transmitted at time t2. Specifically, the data of the first column is carried at frequency f1 and time t1, the data of the second column at frequency f1 and time t2, the data of the third column at frequency f2 and time t1, and the data of the fourth column at frequency f2 and time t2. Thus, the eight symbols are transmitted through the three Tx antennas at two frequencies for two time intervals.

Alternatively, the data of the first two columns can be transmitted at time t1, while that of the last two columns at time t2. The data of the first column in each pair is transmitted at frequency f1 and that of the second column is transmitted at frequency f2. Therefore, the data of the first column is carried at frequency f1 and time t1, the data of the second column at frequency f2 and time t1, the data of the third column at frequency f1 and time t2, and the data of the fourth column at frequency f2 and time t2.

As stated earlier, data transmission according to the coding matrix is not limited to the above time-frequency plane.

Thus transmission of the four columns at different time can be contemplated. That is, the data of the first to fourth columns are carried at time t1 to t4, respectively. In this case, the STFBC coder 306 is replaced by an STBC coder.

Also the columns can be transmitted at different frequencies. That is, the data of the first to fourth columns are carried at frequencies f1 to f4, respectively. In this case, the STFBC coder 306 is replaced by an SFBC coder.

Since the rows of the coding matrix represent the Tx antennas, the data of the first row is transmitted through the first Tx antenna 308, the data of the second row through the second Tx antenna 310, and the data of the third row through the third Tx antenna 312.

Assuming that the second Tx antenna 310 has the highest channel gain, the data is preferably transmitted by the following coding matrix. This transmission mode is set as transmission mode 2.

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

. . . . . (4)

where the rows of the coding matrix represent the Tx antennas and the columns represents time and frequencies taken to transmit the eight symbols.

The data of the first two columns are transmitted at frequency f1, while that of the last two columns at frequency f2. The data of the first column in each pair is transmitted at time t1 and that of the second column is transmitted at time t2. Specifically, the data of the first column is carried at frequency f1 and time t1, the data of the second column at frequency f1 and time t2, the data of the third column at frequency f2 and time t1, and the data of the fourth column at frequency f2 and time t2. Thus, the eight symbols are transmitted through the three Tx antennas at two frequencies for two time intervals.

Alternatively, the data of the first two columns can be transmitted at time t1, while that of the last two columns at time t2. The data of the first column in each pair is transmitted at frequency f1 and that of the second column is transmitted at frequency f2. Therefore, the data of the first column is carried at frequency f1 and time t1, the data of the second column at frequency f2 and time t1, the data of the third column at frequency f1 and time t2, and the data of the fourth column at frequency f2 and time t2.

Similarly to the transmission mode 1 and the transmission mode 3, data transmission according to the coding matrix is not limited to the above time-frequency plane in the transmission mode 2. Therefore, transmission of the four columns at different time or at different frequencies can be contemplated.

Since the rows of the coding matrix represent the Tx antennas, the data of the first row is transmitted through the first Tx antenna 308, the data of the second row through the second Tx antenna 310, and the data of the third row through the third Tx antenna 312.

The STFBC coder mode decider 314 determines which Tx antenna is in the best channel condition based on the CQI of each Tx antenna fed back from the receiver, and notifies the STFBC coder 306 of the determined Tx antenna. The STFBC coder 306 selects one of the coding matrixes described in Equation (1), Equation (2) and Equation (3) in correspondence with the Tx antenna.

Alternatively, the receiver can be so configured as to determine which Tx antenna is in the best channel condition based on the CQI of each Tx antenna and transmits to the STFBC coder 306 a Tx mode index indicating a transmission mode for use in STFBC coding. That is, the receiver decides on a Tx antenna to carry non-Alamouti data based on the CQIs of the Tx antennas and tell the STFBC coder 306 an index indicating the Tx antenna.

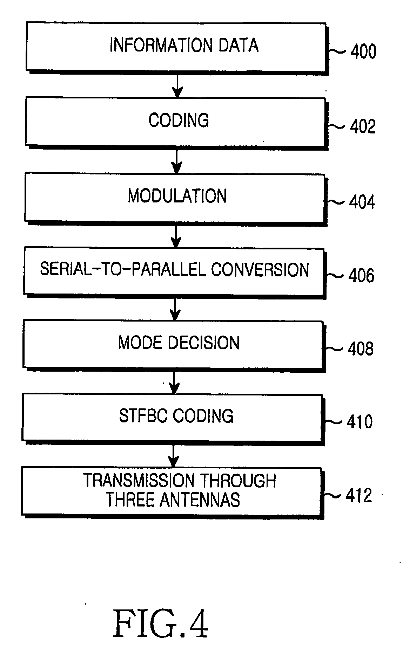

FIG 4 is a flowchart illustrating the transmission operation of the transmitter in the mobile communication system using the STFBC scheme according to the present invention.

Referring to FIG. 4, upon receipt of information data to be transmitted in step 400, the encoder encodes the information data according to a coding scheme in step 402 and the modulator modulates the coded data in step 404. BPSK, QPSK, PAM, QAM or any other modulation scheme is available for the modulation, as described before. The S/P converter converts a serial sequence of modulation symbols to parallel modulation symbol and outputs eight symbols for inputs to the STFC coder in step 406. In step 408, the STFBC coder mode decider determines a transmission mode based on a feedback signal received from the receiver. When the feedback signal indicates that the first TX antenna has the highest CQI, the STFBC coder mode decider selects the transmission mode 1 described in Equation (3). When the feedback signal indicates that the second TX antenna has the highest CQI, the STFBC coder mode decider selects the transmission mode 2 described in Equation (4). When the feedback signal indicates that the third TX antenna has the highest CQI, the STFBC coder mode decider selects the transmission mode 3 described in Equation (2).

The STFBC coder STFBC-encodes the eight symbols according to the determined transmission mode in step 410 and transmits the STFBC-coded signals through the three Tx antennas in step 412.

In the case where the receiver is configured to determine which Tx antenna has the best channel condition based on the CQI of each Tx antenna and to notify the STFBC coder of a Tx mode index, the STFBC coder receives the Tx mode index and, rather than the STFBC code mode decider, determines the transmission mode, in step 408.

Meanwhile, many other coding matrices are available for the STFBC coder (STBC or SFBC coder) that transmits data at a data rate of 2 through three Tx antennas based on feedback CQIs.

An exemplary set of coding matrices are

$$
\begin{bmatrix}
\tilde{s}_7 & -\tilde{s}_8^* & \tilde{s}_3 & -\tilde{s}_4^* \\
\tilde{s}_1 & -\tilde{s}_2^* & \tilde{s}_5 & -\tilde{s}_6^* \\
\tilde{s}_2 & \tilde{s}_1^* & \tilde{s}_6 & \tilde{s}_5^*
\end{bmatrix}
\qquad \ldots \ldots (5)
$$

$$
\begin{bmatrix}
\tilde{s}_1 & -\tilde{s}_2^* & \tilde{s}_3 & -\tilde{s}_6^* \\
\tilde{s}_7 & -\tilde{s}_8^* & \tilde{s}_3 & -\tilde{s}_4^* \\
\tilde{s}_2 & \tilde{s}_1^* & \tilde{s}_6 & \tilde{s}_5^*
\end{bmatrix}
\qquad \ldots \ldots (6)
$$

$$
\begin{bmatrix}
\tilde{s}_1 & -\tilde{s}_2^* & \tilde{s}_5 & -\tilde{s}_6^* \\
\tilde{s}_2 & -\tilde{s}_1^* & \tilde{s}_6 & \tilde{s}_5^* \\
\tilde{s}_7 & \tilde{s}_8^* & \tilde{s}_3 & -\tilde{s}_4^*
\end{bmatrix}
\qquad \ldots \ldots (7)
$$

The above coding matrices represent data re-grouped on a complex plane from constellation-rotated data in the STFBC coder.

In the case where the receiver decides a transmission mode and transmits a Tx mode index indicating the determined transmission mode to the transmitter, a Tx mode index 0b000, 0b1010 or 0b110001 indicates the coding matrix of Equation (5), a Tx mode index 0b001, 0b1011 or 0b110010 indicates the coding matrix of Equation (6), and a Tx mode index 0b010, 0b1100 or 0b110011 indicates the coding matrix of Equation (7).

As described above, the STFBC coding apparatus and method for a 3 Tx-rate 2 transmitter of the present invention enables realization of a more reliable communication system using a transmission scheme where an input symbol sequence is transmitted through a plurality of Tx antennas based on feedback CQIs from a receiver.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A transmitter in a communication system supporting a data rate of 2 for three transmit antennas, comprising:

a serial-to-parallel (S/P) converter for converting serial modulated data to parallel modulated data;

a space-time-block coder mode decider for determining a transmission mode based on a channel quality indicator of each transmit antenna fed back from a receiver; and

a space-time block coder for transmitting the parallel modulated data through the three transmit antennas according to the determined transmission mode.

2. The transmitter of claim 1, wherein one of the following coding matrices is used in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

3. The transmitter of claim 1, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

**4.** A transmitter in a communication system supporting a data rate of 2 for three transmit antennas, comprising:

a serial-to-parallel (S/P) converter for converting serial modulated data to parallel modulated data; and
a space-time-block coder for receiving from a receiver a transmission mode index indicating a transmission mode determined by the receiver and transmitting the parallel modulated data through the three transmit antennas according to the transmission mode.

**5.** The transmitter of claim 4, wherein one of the following coding matrices is used in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

**6.** The transmitter of claim 4, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

7. A transmission method in a communication system supporting a data rate of 2 for three transmit antennas, comprising the steps of:

converting serial modulated data to parallel modulated data;
determining a transmission mode for space-time-block coding based on the channel quality indicator of each transmit antenna fed back from a receiver; and
space-time block coding the parallel modulated data according to the determined transmission mode and transmitting the space-time block coded signal through the three transmit antennas.

8. The transmission method of claim 7, wherein the space-time block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input eight symbols, the rows of the coding matrix represent the three transmit antennas, and the columns represent time at which the eight symbols are transmitted.

9. The transmission method of claim 7, wherein the space-time block coding step comprises the step of using one of the following coding matrices in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

10. A transmission method in a communication system supporting a data rate of 2 for three transmit antennas, comprising the steps of:

converting serial modulated data to parallel modulated data; and
receiving from a receiver a transmission mode index indicating a transmission mode determined by the receiver, space-time block coding the parallel modulated data according to the determined transmission mode, and transmitting the space-time block coded signal through the three transmit antennas.

11. The transmission method of claim 10, wherein the space-time block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

**12.** The transmission method of claim 10, wherein the space-time block coding step comprises the step of using one of the following coding matrices in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time at which the eight symbols are transmitted.

**13.** A transmitter in a communication system supporting a data rate of 2 for three transmit antennas, comprising:

a serial-to-parallel (S/P) converter for converting serial modulated data to parallel modulated data;
a space-frequency block coder mode decider for determining a transmission mode based on the channel quality indicator of each transmit antenna fed back from a receiver; and
a space-frequency block coder for transmitting the parallel modulated data through the three transmit antennas according to the determined transmission mode.

**14.** The transmitter of claim 13, wherein one of the following coding matrices is used in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}.$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent or frequencies at which the eight symbols are transmitted.

**15.** The transmitter of claim 13, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

**16.** A transmitter in a communication system supporting a data rate of 2 for three transmit antennas, comprising:

a serial-to-parallel (S/P) converter for converting serial modulated data to parallel modulated data; and
a space-frequency block coder for receiving from a receiver a transmission mode index indicating a transmission mode determined by the receiver and transmitting the parallel modulated data through the three transmit antennas according to the transmission mode.

**17.** The transmitter of claim 16, wherein one of the following coding matrices is used in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

**18.** The transmitter of claim 16, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

**19.** A transmission method in a communication system supporting a data rate of 2 for three transmit antennas, comprising the steps of:

converting serial modulated data to parallel modulated data;
determining a transmission mode for space-frequency block coding based on the channel quality indicator of each transmit antenna fed back from a receiver; and
space-frequency block coding the parallel modulated data according to the determined transmission mode and transmitting the space-frequency block coded signal through the three transmit antennas.

**20.** The transmission method of claim 19, wherein the space-frequency block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

**21.** The transmission method of claim 19, wherein the space-frequency block coding step comprises the step of using one of the following coding matrices in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

22. A transmission method in a communication system supporting a data rate of 2 for three transmit antennas, comprising the steps of:

converting serial modulated data to parallel modulated data; and
receiving from a receiver a transmission mode index indicating a transmission mode determined by the receiver, space-frequency block coding the parallel modulated data according to the determined transmission mode, and transmitting the space-frequency block coded signal through the three transmit antennas.

23. The transmission method of claim 22, wherein the space-frequency block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent frequencies at which the eight symbols are transmitted.

24. The transmission method of claim 22, wherein the space-frequency block coding step comprises the step of using one of the following coding matrices in the transmission mode,

$$A = \begin{bmatrix} \tilde{s}_7 & -\tilde{s}_8^{\bullet} & \tilde{s}_3 & -\tilde{s}_4^{\bullet} \\ \tilde{s}_1 & -\tilde{s}_2^{\bullet} & \tilde{s}_5 & -\tilde{s}_6^{\bullet} \\ \tilde{s}_2 & \tilde{s}_1^{\bullet} & \tilde{s}_6 & \tilde{s}_5^{\bullet} \end{bmatrix}$$

$$A = \begin{bmatrix} \tilde{s}_1 & -\tilde{s}_2^{\bullet} & \tilde{s}_5 & -\tilde{s}_6^{\bullet} \\ \tilde{s}_7 & -\tilde{s}_8^{\bullet} & \tilde{s}_3 & -\tilde{s}_4^{\bullet} \\ \tilde{s}_2 & \tilde{s}_1^{\bullet} & \tilde{s}_6 & \tilde{s}_5^{\bullet} \end{bmatrix}$$

$$A = \begin{bmatrix} \tilde{s}_1 & -\tilde{s}_2^{\bullet} & \tilde{s}_5 & -\tilde{s}_6^{\bullet} \\ \tilde{s}_2 & -\tilde{s}_1^{\bullet} & \tilde{s}_6 & \tilde{s}_5^{\bullet} \\ \tilde{s}_7 & \tilde{s}_8^{\bullet} & \tilde{s}_3 & -\tilde{s}_4^{\bullet} \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$, denote eight input symbols, the rows of the coding matrix represent the three transmit antennas, and the columns represent frequencies at which the eight symbols are transmitted.

25. A transmitter in a communication system supporting a data rate of 2 for three transmit antennas, comprising:

a serial-to-parallel (S/P) converter for converting serial modulated data to parallel modulated data;
a space-time-frequency block coder mode decider for determining a transmission mode based on the channel quality indicator of each transmit antenna fed back from a receiver; and
a space-time-frequency block coder for transmitting the parallel modulated data through the three transmit antennas according to the determined transmission mode.

26. The transmitter of claim 25, wherein one of the following coding matrices is used in the transmission mode,

$$A = \begin{bmatrix} s_1 & -s_2^{\bullet} & s_3 & -s_4^{\bullet} \\ s_2 & s_1^{\bullet} & s_4 & s_3^{\bullet} \\ s_5 & s_6 & s_7 & s_8 \end{bmatrix}$$

$$A = \begin{bmatrix} s_5 & s_6 & s_7 & s_8 \\ s_2 & s_1^{\bullet} & s_4 & s_3^{\bullet} \\ s_1 & -s_2^{\bullet} & s_3 & -s_4^{\bullet} \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**27.** The transmitter of claim 25, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**28.** A transmitter in a communication system supporting a data rate of 2 for three transmit antennas, comprising:

a serial-to-parallel (S/P) converter for converting serial modulated data to parallel modulated data; and
a space-time-frequency block coder for receiving from a receiver a transmission mode index indicating a transmission mode determined by the receiver and transmitting the parallel modulated data through the three transmit antennas according to the transmission mode.

**29.** The transmitter of claim 28, wherein one of the following coding matrices is used in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**30.** The transmitter of claim 28, wherein one of the following coding matrices is used in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**31.** A transmission method in a communication system supporting a data rate of 2 for three transmit antennas, comprising the steps of:

converting serial modulated data to parallel modulated data;
determining a transmission mode for space-time-frequency block coding based on the channel quality indicator of each transmit antenna fed back from a receiver; and
space-time-frequency block coding the parallel modulated data according to the determined transmission mode and transmitting the space-time-frequency block coded signal through the three transmit antennas.

**32.** The transmission method of claim 31, wherein the space-time-frequency block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}.$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**33.** The transmission method of claim 31, wherein the space-time-frequency block coding step comprises the step of using one of the following coding matrices in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}.$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_2 & -\tilde{s}_1^* & \tilde{s}_6 & \tilde{s}_5^* \\ \tilde{s}_7 & \tilde{s}_8^* & \tilde{s}_3 & -\tilde{s}_4^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**34.** A transmission method in a communication system supporting a data rate of 2 for three transmit antennas, comprising the steps of:

converting serial modulated data to parallel modulated data; and
receiving from a receiver a transmission mode index indicating a transmission mode determined by a receiver, space-time-frequency block coding the parallel modulated data according to the determined transmission mode, and transmitting the space-time-frequency block coded signal through the three transmit antennas.

**35.** The transmission method of claim 34, wherein the space-time-frequency block coding step comprises the step of using one of the following coding matrices in the transmission mode,

$$A = \begin{bmatrix} s_1 & -s_2^* & s_3 & -s_4^* \\ s_2 & s_1^* & s_4 & s_3^* \\ s_5 & s_6 & s_7 & s_8 \end{bmatrix}$$

$$A = \begin{bmatrix} s_5 & s_6 & s_7 & s_8 \\ s_2 & s_1^* & s_4 & s_3^* \\ s_1 & -s_2^* & s_3 & -s_4^* \end{bmatrix}$$

$$A = \begin{bmatrix} s_1 & -s_2^* & s_3 & -s_4^* \\ s_5 & s_6 & s_7 & s_8 \\ s_2 & s_1^* & s_4 & s_3^* \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

**36.** The transmission method of claim 34, wherein the space-time-frequency block coding step comprises the step of using one of the following coding matrices in the transmission mode,

$$A = \begin{bmatrix} \tilde{s}_7 & -\tilde{s}_8^* & \tilde{s}_3 & -\tilde{s}_4^* \\ \tilde{s}_1 & -\tilde{s}_2^* & \tilde{s}_5 & -\tilde{s}_6^* \\ \tilde{s}_2 & \tilde{s}_1^* & \tilde{s}_6 & \tilde{s}_5^* \end{bmatrix}$$

$$A = \begin{bmatrix} \tilde{s}_1 & -\tilde{s}_2^* & \tilde{s}_5 & -\tilde{s}_6^* \\ \tilde{s}_7 & -\tilde{s}_8^* & \tilde{s}_3 & -\tilde{s}_4^* \\ \tilde{s}_2 & \tilde{s}_1^* & \tilde{s}_6 & \tilde{s}_5^* \end{bmatrix}$$

$$A = \begin{bmatrix} \widetilde{s}_1 & -\widetilde{s}_2^{\bullet} & \widetilde{s}_5 & -\widetilde{s}_6^{\bullet} \\ \widetilde{s}_2 & -\widetilde{s}_1^{\bullet} & \widetilde{s}_6 & \widetilde{s}_5^{\bullet} \\ \widetilde{s}_7 & \widetilde{s}_8^{\bullet} & \widetilde{s}_3 & -\widetilde{s}_4^{\bullet} \end{bmatrix}$$

where A denotes a coding matrix for symbols to be transmitted through the three transmit antennas, $s_1$, $s_2$, $s_3$, $s_4$, $s_5$, $s_6$, $s_7$, $s_8$ denote eight input symbols, the rows of the coding matrix represent the three transmit antennas, and the columns represent time and frequencies at which the eight symbols are transmitted.

FIG.1

PRIOR ART

204 202 200

206 210 212

| STFBC DECODER | → | DETECTOR | → | DECODER |

208

CHANNEL ESTIMATOR

# FIG.2
# PRIOR ART

FIG.3

```
┌────────────────────────────────┐
│      INFORMATION DATA          │──～ 400
└────────────────────────────────┘
              │
              ▼
┌────────────────────────────────┐
│           CODING               │──～ 402
└────────────────────────────────┘
              │
              ▼
┌────────────────────────────────┐
│         MODULATION             │──～ 404
└────────────────────────────────┘
              │
              ▼
┌────────────────────────────────┐
│  SERIAL-TO-PARALLEL CONVERSION │──～ 406
└────────────────────────────────┘
              │
              ▼
┌────────────────────────────────┐
│        MODE DECISION           │──～ 408
└────────────────────────────────┘
              │
              ▼
┌────────────────────────────────┐
│         STFBC CODING           │──～ 410
└────────────────────────────────┘
              │
              ▼
┌────────────────────────────────┐
│    TRANSMISSION THROUGH        │──～ 412
│      THREE ANTENNAS            │
└────────────────────────────────┘
```

# FIG.4